(19) Europäisches Patentamt
European Patent Office
Office européen des brevets

(11) **EP 3 159 125 A1**

(12) **EUROPEAN PATENT APPLICATION**
published in accordance with Art. 153(4) EPC

(43) Date of publication:
**26.04.2017 Bulletin 2017/17**

(51) Int Cl.:
***B25J 13/08*** (2006.01)　　　***B25J 9/16*** (2006.01)

(21) Application number: **15810224.4**

(22) Date of filing: **17.06.2015**

(86) International application number:
**PCT/KR2015/006156**

(87) International publication number:
**WO 2015/194867 (23.12.2015 Gazette 2015/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **17.06.2014 KR 20140073708**

(71) Applicant: **Yujin Robot Co., Ltd.**
**Seoul 153-802 (KR)**

(72) Inventors:
• **SHIN, Kyung Chul**
**Seoul 110-846 (KR)**
• **PARK, Seong Ju**
**Gunpo-si**
**Gyeonggi-do 435-802 (KR)**
• **LEE, Jae Young**
**Gunpo-si**
**Gyeonggi-do 435-710 (KR)**

(74) Representative: **Capasso, Olga et al**
**De Simone & Partners SpA**
**Via Vincenzo Bellini, 20**
**00198 Roma (IT)**

(54) **DEVICE FOR RECOGNIZING POSITION OF MOBILE ROBOT BY USING DIRECT TRACKING, AND METHOD THEREFOR**

(57)　Disclosed are an apparatus for recognizing a position of a mobile robot using direct tracking and a method thereof. An apparatus of recognizing a position of a mobile robot includes two wide angle cameras which obtain one pair of stereo images on a region of interest including a vertical direction and a horizontal direction in accordance with movement of a mobile robot; and a position recognizing unit which extracts an edge from the received stereo image to project a seed in a given key frame based on the extracted edge, updates a status parameter indicating rotation and movement of a camera using an intensity error in the calculated projected seed as the projection result, and estimates a position of the mobile robot using the update result.

[FIG. 2]

**Description**

**CROSS-REFERENCE TO RELATED APPLICATIONS**

This application is a continuation of International Application No. PCT/KR2015/006156, filed on June 17, 2015, which claims priority to and the benefit of Korean Patent Application No. 10-2014-0073708 filed in the Korean Intellectual Property Office on June 17, 2014, both of which are hereby incorporated by reference in their entireties.

**TECHNICAL FIELD**

The present invention relates to a position recognizing method of a mobile robot, and more particularly, to an apparatus for recognizing a position of a mobile robot using direct tracking and a method thereof.

**BACKGROUND ART**

Recently, according to development of a robot technology, a mobile robot which sets a route by itself and moves is utilized. In order to allow the mobile robot to efficiently determine a position and move in a space, it is required to allow the mobile robot to recognize a position of the robot on the space while generating a map for a space where the robot moves.

The mobile robot is driven by a dead reckoning navigation using a gyroscope and an encoder provided in a driving motor and generates a map by analyzing an image using a camera provided in an upper portion. In this case, when an error is incurred by driving information from the gyroscope and the encoder, image information obtained from the camera is utilized to correct an accumulated error.

However, a location based mobile robot which has been developed until now is developed under an assumption of a movement on a two-dimensional plane using a monocular camera or a laser scanner. However, when the monocular camera is used, it is difficult to know a distance to a feature point. Therefore, as the error of the dead reckoning navigation is increased, lots of errors may be included in the position recognizing result.

Further, since the laser scanner is too expensive to apply to the mobile robot, studies for using a simultaneous localization and mapping (SLAM) technology which recognizes a space and updates a location using a stereo camera have been increased in recent years.

The SLAM technology based mobile robot performs processes of extracting a corner feature point from an image, creating a map by restoring three-dimensional coordinates of the corner feature point, and recognizing a location.

It is very important for the mobile robot to recognize a space and recognize its own position in the space. Since a mobile robot which does not have the above-described technique has limited mobility and may provide a very limited type of service, the mobile robots are competitively developed.

**SUMMARY OF THE INVENTION**

In order to solve the above-mentioned problems in the existing technology, an object of the present invention is to provide an apparatus for recognizing a position of a mobile robot using direct tracking which repeatedly performs processes of projecting a seed in a given key frame based on predicted status information to calculate an intensity difference between an edge in an image and the project seed as a projection result, updating a status parameter indicating rotation and movement of a camera to reduce the calculated intensity difference and estimating a position based on the updated status parameter until the intensity difference becomes within a threshold value, and a method thereof.

Another object of the present invention is to provide an apparatus for recognizing a position of a mobile robot using direct tracking which estimates a position based on one odometry information selected between odometry information calculated by a stereo image based visual odometry and odometry information calculated by an inertia information based internal odometry and a method thereof.

Still another object of the present invention is to further provide an apparatus for recognizing a position of a mobile robot using direct tracking which extracts a predetermined number of horizontal lines from a stereo image to perform dense stereo alignment along the extracted horizontal lines to obtains distance information to an obstacle as a result and a method thereof.

However, an object of the present invention is not limited to the above description and other objects which have not been mentioned above will be more apparent to those skilled in the art from a reading of the following description.

According to an aspect of the present invention, an apparatus for recognizing a position of a mobile robot includes: an image input unit which receives at least one pair of stereo images obtained using a camera provided in a mobile robot; and a position recognizing unit which extracts an edge from the received stereo image to project a seed in a given key frame based on the extracted edge, updates a status parameter indicating rotation and movement of a camera using an intensity error in the projected seed calculated as the projection result, and estimates a position of the mobile robot using the update result.

The apparatus for recognizing a position of a mobile robot according to an aspect of the present invention may further include two cameras which obtain stereo images.

Preferably, the position recognizing unit may include: an intensity error calculating unit which projects a seed in a given key frame to calculate an intensity error between an edge and the project seed as a projection result; a parameter updating unit which updates a status parameter indicating rotation and movement of a camera to reduce the calculated intensity error; and a position estimating unit which estimates a position of the mobile robot as a position where the intensity error is reduced based on the updated status parameter.

Preferably, the parameter update unit may calculate gradients in the first axis direction and the second axis direction in a coordinate of the projected seed, calculate a projection function using the status parameter at the present time, and update the status parameter using the calculated intensity error, the gradient, and the projection function to reduce the intensity error.

Preferably, the projection function may be a Jacobian of projection function. To update the status parameter to reduce the intensity error using the projection function may be to calculate a hessian matrix using the intensity error, the gradient, and the projection function and to update the status parameter using the hessian matrix to reduce the intensity error.

Preferably, the position recognizing unit may calculate a variation of the status parameter to be updated using the hessian matrix, check whether the calculated variation of the status parameter satisfies the predetermined repetition condition to update the status parameter and select the final position by the status parameter at the present time when the repetition condition is not satisfied as the checking result.

Preferably, when the repetition condition is satisfied as the checking result, the position recognizing unit may update the status parameter using the calculated variation.

Preferably, the repetition condition may include whether the variation of the status parameter is equal to or larger than the predetermined threshold value.

Preferably, the position recognizing unit may predict status information using calculated odometry information based on the edge and estimates the current position using the predicted status information and the previously stored key frame.

Preferably, the position recognizing unit may predict status information using one of first odometry information calculated based on the edge and second odometry information calculated based on inertia information and estimate the current position using the predicted status information and the previously stored key frame.

Preferably, the position recognizing unit may select the first odometry information when the first odometry information satisfies the predetermined condition and select the second odometry information when the first odometry information does not satisfy the predetermined condition.

Preferably, the position recognizing unit may search for at least one key frame among a previously stored key frame set based on the predicted status information and estimate the current position of the mobile robot using at least one searched key frame as the result.

According to another aspect of the present invention, a method for recognizing a position of a mobile robot includes: receiving at least one pair of stereo images obtained using a camera provided in a mobile robot; and extracting an edge from the received stereo image to project a seed in a given key frame based on the extracted edge, updating a status parameter indicating rotation and movement of a camera using an intensity error in the projected seed calculated as the projection result, and estimating a position of the mobile robot using the update result.

Preferably, the estimating may include: projecting a seed in a given key frame to calculate an intensity error between an edge and the project seed as a projection result; updating a status parameter indicating rotation and movement of a camera to reduce the calculated intensity error; and estimating a position of the mobile robot as a position where the intensity error is reduced based on the updated status parameter.

Preferably, in the updating, a gradient in the first axis direction and the second axis direction may be calculated in a coordinate of the projected seed, a projection function may be calculated using the status parameter at the present time, and the status parameter may be updated using the calculated intensity error, the gradient, and the projection function to reduce the intensity error.

Preferably, the projection function may be a Jacobian of projection function and to update the status parameter to reduce the intensity error using the projection function may be to calculate a hessian matrix using the intensity error, the gradient, and the projection function and to update the status parameter using the hessian matrix to reduce the intensity error.

Preferably, in the estimating, a variation of the status parameter to be updated may be calculated using the hessian matrix, it may be checked whether the calculated variation of the status parameter satisfies the predetermined repetition condition to update the status parameter and the final position may be selected by the status parameter at the present time when the repetition condition is not satisfied as the checking result.

Preferably, in the estimating, when the repetition condition is satisfied as the checking result, the status parameter may be updated using the calculated variation.

Preferably, the repetition condition may include whether the variation of the status parameter is equal to or larger than the predetermined threshold value.

Preferably, in the estimating, status information may be predicted using odometry information calculated based on the edge and the current position may be estimated using the predicted status information and the previously key frame.

Preferably, in the estimating, status information may be predicted using one of first odometry information calculated based on the edge and second odometry information calculated based on inertia information and the current position may be estimated using the predicted status information and the previously stored key frame.

Preferably, in the estimating, the first odometry information may be selected when the first odometry information satisfies the predetermined condition and the second odometry information may be selected when the first odometry information does not satisfy the predetermined condition.

Preferably, in the estimating, at least one key frame may be searched among a previously stored key frame set based on the predicted status information and the current position of the mobile robot may be estimated using at least one searched key frame as the result.

According to the present invention, processes of projecting a seed in a given key frame based on predicted status information to calculate an intensity difference between an edge in an image and the project seed as a projection result, updating a status parameter indicating rotation and movement of a camera to reduce the calculated intensity difference and estimating a position based on the updated status parameter are repeatedly performed until the intensity difference becomes within a threshold value, thereby recognizing an accurate position.

Further, according to the present invention, the position is estimated based on one odometry information selected between odometry information calculated from a stereo image based visual odometry and odometry information calculated based on inertia information based internal odometry, thereby reducing an positional error incurred when the mobile robot is tilted or slides.

Further, according to the present invention, a problem vulnerable to a positional error incurred when the mobile robot is tilted or slides is solved so that the position may be stably recognized.

Further, according to the present invention, a predetermined number of horizontal lines is extracted from a stereo image to perform dense stereo alignment along the extracted horizontal lines to obtain distance information to an obstacle as a result, thereby obtaining distance information to an obstacle without attaching an expensive dedicated sensor for measuring a distance.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE DRAWINGS

FIG. 1 is a view illustrating an apparatus for recognizing a position of a mobile robot according to an exemplary embodiment of the present invention.

FIG. 2 is a view illustrating a region of interest of a wide angle camera according to an exemplary embodiment of the present invention.

FIG. 3 is a view illustrating a space recognizing process according to an exemplary embodiment of the present invention.

FIG. 4 is a view illustrating uncertainty of a three-dimensional point according to an exemplary embodiment of the present invention.

FIG. 5 is a view illustrating three-dimensional information on an edge according to an exemplary embodiment of the present invention.

FIG. 6 is a view illustrating a position recognizing concept according to an exemplary embodiment of the present invention.

FIG. 7 is a view illustrating a position recognizing process according to an exemplary embodiment of the present invention.

FIGS. 8A and 8B are views illustrating a position recognizing principle according to an exemplary embodiment of the present invention.

FIG. 9 is a view illustrating an obstacle sensing process according to an exemplary embodiment of the present invention.

FIG. 10 is a view illustrating a method for recognizing a position of a mobile robot according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

## DETAILED DESCRIPTION

Hereinafter, an apparatus for recognizing a position of a mobile robot using direct tracking and a method thereof according to an exemplary embodiment of the present invention will be described with reference to accompanying drawings. Parts which are required to understand an operation and an effect of the present invention will be mainly described in detail.

In the description of components of an exemplary embodiment, a component having the same name may be denoted by a different reference numeral in some drawings but may be denoted by the same reference numeral even in different drawings. However, even in this case, it does not mean that the component has different functions depending on the exemplary embodiment or the components have the same function in the different exemplary embodiments but the function of each of the components may be determined based on the description of the components in the corresponding exemplary embodiment.

The present invention suggests a new method which repeatedly performs processes of projecting a seed in a given key frame based on predicted status information to calculate an intensity difference between an edge in an image and the project seed as a projection result, updating a status parameter indicating rotation and movement of a camera to reduce the calculated intensity difference and estimating a position based on the updated status parameter until the intensity difference becomes within a threshold value.

Further, according to an exemplary embodiment, a position is estimated based on one odometry information selected between odometry information calculated by a stereo image based visual odometry and odometry information calculated by an inertia information based internal odometry, and a predetermined number of horizontal lines is extracted from a stereo image to perform dense stereo alignment along the extracted horizontal lines to obtains distance information to an obstacle as a result.

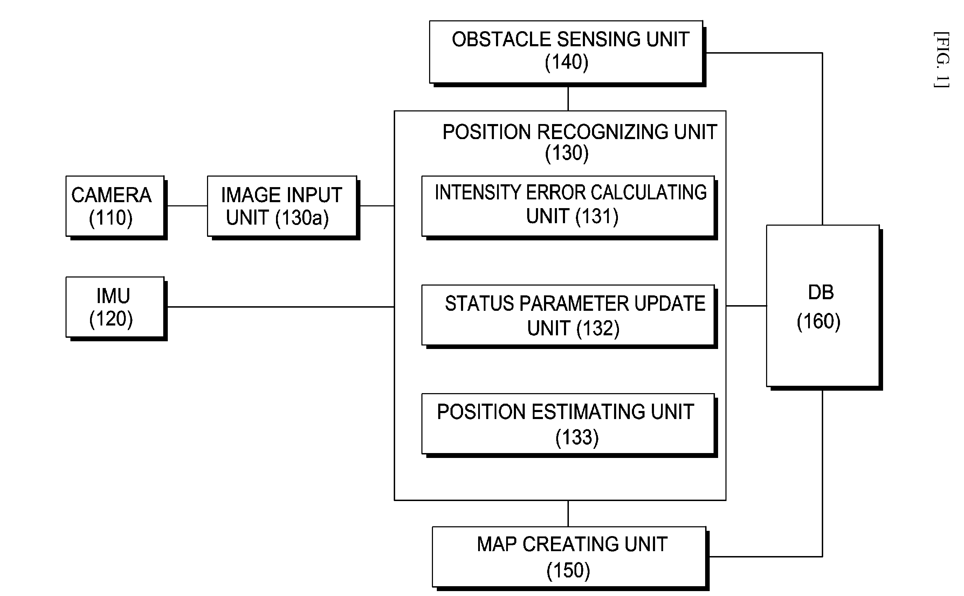

FIG. 1 is a view illustrating an apparatus for recognizing a position of a mobile robot according to an exemplary embodiment of the present invention.

The mobile robot position recognizing apparatus according to an exemplary embodiment of the present invention may include an image input unit 130a and a position recognizing unit 130. The mobile robot position recognizing apparatus according to the exemplary embodiment of the present invention includes at least one of a camera 110, an inertial measurement unit (IMU) 120, a position recognizing unit 130, an obstacle sensing unit 140, a map creating unit 150, and a database (DB) 160, if necessary.

The image input unit 130a receives at least a pair of stereo images obtained from the mobile robot. The stereo image may be images obtained using two cameras provided in the mobile robot.

Two cameras 110 may be provided to obtain a pair of stereo images, that is, a left image and a right image. Here, two cameras indicate that two different lens are used to obtain an image at two visions. Further, an example that two lenses are provided in one image obtaining device to obtain two images is also same meaning. In this case, the camera 110 may be mounted to have a predetermined interested area. Here, the region of interest may be a region to be photographed using the camera 110 provided in the mobile robot.

The camera 100 may be desirably a wide angle camera. The wide angle camera is a camera which photographs using a wide angle lens having an angle of view which is larger than that of a general camera lens. It is desirable to use a wide angle camera for the mobile robot to obtain a broader surrounding image. For example, the wide angle camera may be a camera using a fish eye lens. Here, in the wide angle camera, an angle of view of the wide angle lens may be 60 to 270 degrees. In the wide angle camera according to the exemplary embodiment of the present invention, the angle of view is not limited to the range of the above-described angle view and a camera using a lens having various range of an angle of view may be used.

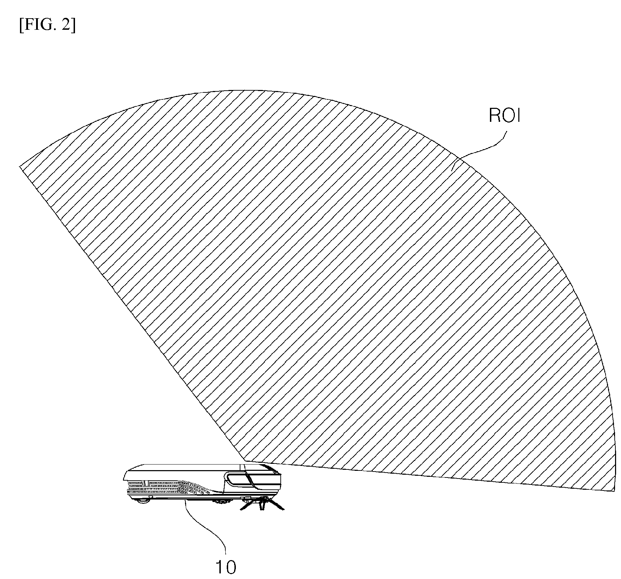

FIG. 2 is a view illustrating a region of interest of a wide angle camera according to an exemplary embodiment of the present invention.

As illustrated in FIG. 2, two cameras 110 according to the exemplary embodiment of the present invention are mounted to be directed to both a ceiling and a front side using the wide angle camera in the mobile robot 10 as compared with the mobile robot of the related art which is directed to the ceiling or the front side so that in the mobile robot, both the ceiling and the front side may be set as regions of interest (ROI).

For example, the camera may photograph regions in both a horizontal direction and a vertical direction using the wide angle lens.

According to the exemplary embodiment of the present invention, both the ceiling and the front side are set as the regions of interest using the camera 110 mounted as described above, so that the feature points may be easily secured. Further, the position may be recognized even when it is difficult to find feature points and an obstacle at the front side may be recognized.

The IMU 120 measures inertia information of the mobile robot, for example, information such as a position, a pose, and the like.

The position recognizing unit 130 extracts an edge from a received stereo image. In this exemplary embodiment of the present invention, as described above, the edge may be extracted using approximated difference of Gaussian (ADoG) or a gradient.

First, a method of extracting an edge using a gradient will be described.

The position recognizing unit 130 obtains gradients in a first axis direction and a second axis direction from each pixel of the received stereo image and extracts the edge based on the gradients in the first axis direction and the second axis direction.

The first axis and the second axis may be different axes which are orthogonal to each other in a coordinate system of a plane of a stereo image. Desirably, the first axis and the second axis may be an x-axis and a y-axis of an orthogonal coordinate system formed by the x-axis and the y-axis. Hereinafter, an operation of the position recognizing unit 130 with the x-axis and the y-axis as the first axis and the second axis will be described. Hereinafter, the operation of the position recognizing unit 130 which has been described with reference to the x-axis and the y-axis will be applied to the first axis and the second axis in the same way.

Next, the position recognizing unit 130 calculates a magnitude $I_m$ of the gradient using gradients $I_x$ and $I_y$ in the x-axis direction and the y-axis direction. The magnitude $I_m$ may be calculated by the following equation of $I_m = (I_x^2 + I_y^2)^{1/2}$.

Next, the position recognizing unit 130 calculates an angle Ie of the gradient using gradients $I_x$ and $I_y$ in the x-axis direction and the y-axis direction. The angle $I_\theta$ may be calculated by the following Equation of Ie = atan2 $(I_x, I_y)$. Here, atan2(y,x) is an arctangent calculating function having two input variables and for example, may be calculated by the following equation.

$$
\mathrm{atan2}(y,x) = \begin{cases}
\arctan\dfrac{y}{x} & x > 0 \\
\arctan\dfrac{y}{x} + \pi & y \geq 0,\ x < 0 \\
\arctan\dfrac{y}{x} - \pi & y < 0,\ x < 0 \\
+\dfrac{\pi}{2} & y > 0,\ x = 0 \\
-\dfrac{\pi}{2} & y < 0,\ x = 0 \\
\mathrm{underfined} & y = 0,\ x = 0
\end{cases}
$$

Next, the position recognizing unit 130 finally extracts an edge image through a non-maximal suppression (NMS) process based on the calculated magnitude of the gradient $I_m$ and the angle of the gradient Ie of each pixel.

That is, the position recognizing unit 130 selects a pixel having the largest magnitude $I_m$ of the gradient among adjacent pixels having the same angle with respect to the angle of the gradient Ie of the pixel as a maximal value.

This process is applied to all pixels to extract an edge formed by one line.

Thereafter, the position recognizing unit 130 extends a region to a predetermined number of pixels adjacent to the pixel located on the line which forms the edge and selects a pixel having a size which is equal to or larger than a predetermined threshold value in the extended region as an edge.

For example, the position recognizing unit 130 extends the region to two pixels which is the most adjacent to the pixel and selects all pixels having a size which is equal to or larger than the predetermined threshold value among pixels in the extended region as an edge.

This process is applied to all pixels to extract a final edge image which is formed by a plurality of lines extended from the edge formed by one line through the NMS.

Here, the NMS (non-maximal suppression) process may use a non-maximal suppression technique introduced in "Canny, J., A Computational Approach To Edge Detection, IEEE Trans. Pattern Analysis and Machine Intelligence, 8(6):679 to 698, 1986." or may use other various types of non-maximal suppression techniques.

Next, a method of extracting an edge using an approximated difference of Gaussian (ADoG) will be described.

The present invention suggests a new method which calculates an integral image from an original image and performs a box smoothing process on the integral image to obtain a box smoothing image as the box smoothing result and then subtracts the original image from the box smoothing image to finally extract an edge image. In the present invention, a method of extracting an edge by the box smoothing process is referred to as an approximated difference of Gaussian (ADoG).

Here, the position recognizing unit 130 performs a smoothing processing on the received stereo image and obtains a smoothing image as the smoothing result. The position recognizing unit 130 compares the smoothing image and the original stereo image to extract an edge and estimates the current position of the mobile robot based on the extracted edge.

Here, the position recognizing unit 130 obtains an integral image from the stereo image, performs a box smoothing process on the obtained integral image to calculate a box smoothing image as the box smoothing processing result, compares the calculated box smoothing image and the original stereo image to extract the edge as a comparison result.

To this end, the position recognizing unit 130 may include an integral image obtaining unit which obtains an integral image from the stereo image, a box smoothing image calculating unit which performs a box smoothing process on the obtained integral image to calculate a box smoothing image as the box smoothing processing result, and an edge extracting unit which compares the calculated box smoothing image and the original stereo image to extract the edge as a comparison result. The position recognizing unit may further include a position estimating unit. Here, the position estimating unit may perform an operation of estimating a position of the mobile robot using the edge extracted by the position recognizing unit 130, which will be described in detail below.

The integral image obtaining unit of position recognizing unit 130 according to the exemplary embodiment of the present invention obtains an integral image IntegImage from the stereo image orgImage by the following Equation.

$$\text{IntegImage}(x,y) = \sum_{y'=0}^{y} \sum_{x'=0}^{x} orgImage(x',y')$$

Next, the smoothing image calculating unit of the position recognizing unit 130 performs a box blurring process or a box smoothing process on the obtained integral image to calculate a box smoothing image as the box smoothing processing result.

In this case, the box smoothing may be a preprocessing process for removing a noise or extracting contour information, similarly to the Gaussian smoothing.

In the present invention, the box smoothing processing has been described as an example, but the present invention is not limited thereto and various smoothing processing technique, for example, a Gaussian smoothing may be applied.

Next, the edge extracting unit of the position recognizing unit 130 extracts an edge image $I_{edge}$ by subtracting an original image, that is, the stereo image $I_{source}$ from the box smoothing image $I_{box\_blur}$, which may be calculated by the following equation $I_{edge} = I_{box\_blur} - I_{source}$.

The final edge image may be extracted through the integral process, the smoothing process, and the subtraction process.

The position recognizing unit 130 receives a stereo image from the camera 110 and recognizes a given space based on the received stereo image whenever the mobile robot moves a predetermined distance.

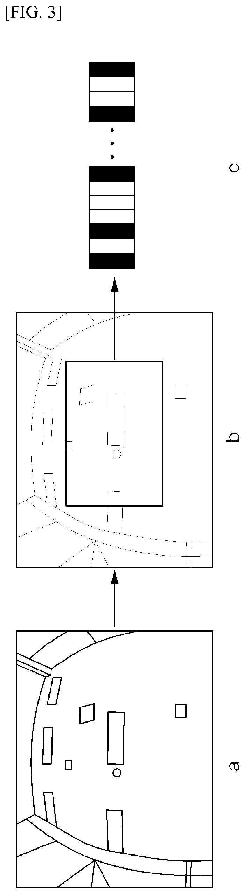

FIG. 3 is a view illustrating a space recognizing process according to an exemplary embodiment of the present invention.

As illustrated in FIG. 3, the position recognizing unit 130 recognizes the given space whenever the mobile robot moves a predetermined distance or a new key frame is generated to create a database thereof.

The position recognizing unit 130 reduces the received stereo image to have a predetermined size to be blurred. Here, the predetermined size may be one eighth of the received stereo image. Referring to FIG. 3, the position recognizing unit 130 reduces the received stereo image (a) and generates a blurred image (b).

The position recognizing unit 130 encodes the blurred stereo image using a binary robust independent elementary features (BRIEF) binary descriptor to generate binary data as the encoding result. Here, the BRIEF binary descriptor may be encoded using a method introduced in {BRIEF}: Computing a Local Binary Descriptor Very Fast, M. Calonder, V. Lepetit, M. Ozuysal, T. Trzcinski, C. Strecha, and P. Fua IEEE Transactions on Pattern Analysis and Machine Intelligence 2012. Here, the binary data may be generated to be 32 byte. FIG. 3C is a reference view illustrating the BRIEF binary descriptor.

The position recognizing unit 130 compares the binary data generated as described above and data indicating an absolute position of the mobile robot in the previously stored key frame to recognize the current position with the absolute position when the absolute position is within a predetermined range as the comparison result.

The reason why the BRIEF binary descriptor is used to recognize a space in the exemplary embodiment of the present invention is because an operating speed is much faster than that of descriptors which are used in the related art, such as SIFT or SURF.

The position recognizing unit 130 receives the stereo image from the wide angle camera 110 to obtain first odometry information through a visual odometry based on the input stereo image and receives inertia information from the IMU 120 to obtain second odometry information through an internal odometry based on the input inertia information.

In this case, the position recognizing unit 130 extracts a feature point from the stereo image to trace the extracted feature point and obtains the odometry information using the traced feature point.

Generally, the feature point which is extracted during a preprocessing process is a corner. However, it is difficult to obtain a sufficient amount of feature points in a region where there is no texture, such as a hallway or a large office space.

In order to solve the above-mentioned problem, the position recognizing unit 130 performs stereo matching on an edge. That is, the position recognizing unit 130 extracts an edge from the stereo image and performs sparse stereo matching on the extracted edge. Here, the sparse stereo matching is a concept which is distinguished from dense stereo matching. The sparse stereo matching is a matching method which sparsely and quickly matches stereo images, instead of calculating an exact matching result. Therefore, various methods of the related art for adjusting a matching interval or adjusting a search range for the matching may be used.

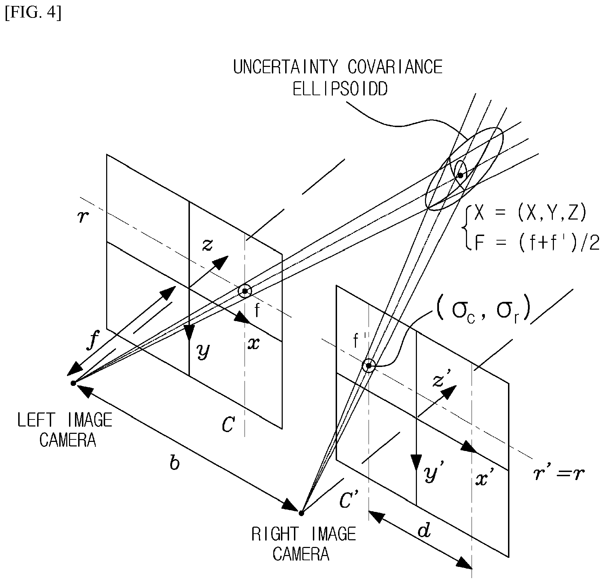

FIG. 4 is a view illustrating uncertainty of a three-dimensional point according to an exemplary embodiment of the present invention.

As illustrated in FIG. 4, the position recognizing unit 130 sets uncertainty $\sigma$ according to a depth value obtained by a result of stereo matching and stores the uncertainty $\sigma$ in the DB. In the case of a wide angle camera, a focal length is very short so that the resolution is low. Therefore, the reliability of the obtained depth value is low so that the update is performed later.

The uncertainty of the three-dimensional point obtained using two wide angle cameras is represented by Equation 1.

[Equation 1]

$$\Sigma = \begin{bmatrix} \sigma_X^2 & \sigma_{XY} & \sigma_{XZ} \\ \sigma_{XY} & \sigma_Y^2 & \sigma_{YZ} \\ \sigma_{XY} & \sigma_{YZ} & \sigma_Z^2 \end{bmatrix} = \begin{bmatrix} \dfrac{b^2\sigma_c^2}{d^2} + \dfrac{b^2(c-c_0)\sigma_d^2}{d^4} & \dfrac{(c-c_0)b^2\sigma_d^2(r-r_0)}{d^4} & \dfrac{(c-c_0)b^2\sigma_d^2 f}{d^4} \\ \dfrac{(c-c_0)b^2\sigma_d^2(r-r_0)}{d^4} & \dfrac{b^2\sigma_r^2}{d^2} + \dfrac{b^2(r-r_0)\sigma_d^2}{d^4} & \dfrac{(r-r_0)b^2\sigma_d^2 f}{d^4} \\ \dfrac{(c-c_0)b^2\sigma_d^2 f}{d^4} & \dfrac{(r-r_0)b^2\sigma_d^2 f}{d^4} & \dfrac{f^2 b^2\sigma_d^2}{d^4} \end{bmatrix}$$

Here, $\begin{bmatrix} \sigma_X^2 & \sigma_{XY} & \sigma_{XZ} \\ \sigma_{XY} & \sigma_Y^2 & \sigma_{YZ} \\ \sigma_{XY} & \sigma_{YZ} & \sigma_Z^2 \end{bmatrix}$ indicates an uncertainty covariance ellipsoid and b indicates a distance between cameras, x, y, z indicate a coordinate system of the left image camera and x', y', z' indicates a coordinate system of the right image camera. (c, r) and (c', r') indicate coordinates of matching pixels in the left camera and the right camera, f and f indicate focal distances of the left camera and the right camera. $\sigma_r$, $\sigma_c$ represents the uncertainty when the feature point is extracted as axes and ro and $c_0$ represent the optical axis of the camera by a camera coordinate system. Further, d is a difference generated when the feature point is projected to the left side and the right side and generally referred to as a disparity.

At a time when it is determined that the mobile robot moves a predetermined distance, pixels which are stored in the key frame are projected to the current image to find the most similar pixel and update the depth value. The update may be performed by applying a general Bayesian rule.

In this case, erroneous information is input due to various variables, specifically, a moving obstacle or a block while the mobile robot is moving and thus a depth value obtained based on erroneous information may have an outlier.

In order to solve the above-mentioned problem, when the obtained depth value is within $1\Sigma$, a variable no_success is increased by one and when the obtained depth value is larger than $1\Sigma$, the variable no_failure is increased by one. Thereafter, only when the reliability no_success/(no_success + no_failure) is larger than a specific value, the depth value is used to recognize the position.

The Bayesian rule which is used to update the depth value is represented by Equation 2.

[Equation 2]

$$\mu = \left[ \ \sigma_{Z_2}^2/( \ \sigma_{Z_1}^2 + \ \sigma_{Z_2}^2)\right]\mu_{Z_1} + \left[ \ \sigma_{Z_1}^2/( \ \sigma_{Z_1}^2 + \ \sigma_{Z_2}^2)\right]\mu_{Z_2}$$

$$1/\sigma^2 = (1/ \ \sigma_{Z_1}^2) + (1/ \ \sigma_{Z_2}^2)$$

Here, even though the updating process of the depth value z has been described, the x-value and the y-value vary depending on z. Therefore, x, y, and z are updated so that the position is figured out and the updated x, y, z are used to figure the position of the camera in the other way.

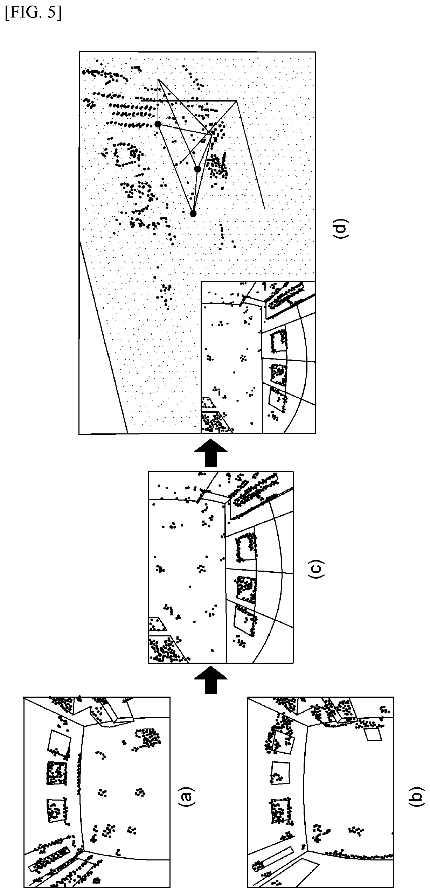

FIG. 5 is a view illustrating three-dimensional information on an edge according to an exemplary embodiment of the present invention. FIG. 5(a) is an image representing a depth value which is projected to the left image camera, FIG. 5(b) is an image representing a depth value which is projected to the right image camera, FIG. 5(c) is an image representing a depth value obtained through the updating process, and FIG. 5(d) is an image representing projection to a matching point and a depth value.

As illustrated in FIG. 5, it is understood that when the depth value is repeatedly updated, the three-dimensional information on the edge may be consistently obtained.

The information of the IMU is very important in a situation where it is difficult to recognize the environment by the camera. However, in cheap IMUs, bias is significantly deformed or hardly estimated. In order to solve the above-mentioned problem, the bias is obtained by stopping the robot for a moment and taking an average. In this case, the user may think that the mobile robot is not intelligent and the working speed is lowered.

In order to solve the above-mentioned problem, the position recognizing unit 130 updates the bias during the movement.

It is assumed that $<\theta_g$ is an angular velocity obtained by a gyro sensor and $\theta_c$ is an angular velocity obtained by a wide angle stereo vision. However, an error may be incurred between angular velocities due to the bias while the mobile robot is moving. The error $\theta_e$ may be defined by Equation 3.

[Equation 3]

$$\theta_e = \theta_g - \theta_c$$

In this case, $\theta_e$ may be a bias. When speedy rotation or disturbance is generated, the bias is updated by applying Bayesian rule as represented by Equation 4.

[Equation 4]

$$\text{If, } |\theta| < \text{threshold}_{moving}, \ \mu_n = \theta_e, \ \sigma^2 = 1\text{deg/sec} \times 0.1\text{deg/sec}$$

When the mobile robot may stop during the movement, the bias is updated as represented by Equation 5.

[Equation 5]

$$\text{If, } |\theta| < \text{threshold}_{stop}, \mu_n = \theta_e, \sigma^2 = 0.1\,\text{deg/sec} \times 0.1\,\text{deg/sec}$$

Since the bias is corrected in real time by the above-described update process, even when the camera cannot be used momentarily, the odometry information using the IMU may maintain a predetermined level of accuracy using the optimal bias.

The position recognizing unit 130 estimates current state information, for example, a pose or a position based on one odometry information selected from first odometry information and second odometry information.

Here, the position recognizing unit 130 performs stereo matching between the stereo images using the edge extracted from the stereo image to calculate the disparity value or the depth value in the pixel included in the stereo image and estimates the current position of the mobile robot using the calculated disparity value or the depth value. That is, the stereo matching between the stereo images is performed on the pixel corresponding to the edge extracted from the stereo image to calculate the disparity value or the depth value and the current position of the mobile robot is estimated using the disparity value or the depth value, the optical axis information of the camera, the focal distance information, distance information between the stereo cameras. That is, when the disparity or the depth value in a specific pixel of the stereo image and specification information (the optical axis, the focal distance, the distance between cameras) of the camera which obtains the stereo image are known, a three-dimensional coordinate may be restored in the pixel and the position of the mobile robot may be relatively figured out through the three-dimensional coordinate in the pixels included in the stereo image.

For example, when the optical axes u0 and v0 are known, the focal distance f, the distance b between cameras are known, and the disparity d is known through the stereo matching, the restored three-dimensional coordinates (x, y, z) is $\left( \dfrac{b(u-u0)}{d}, \dfrac{b(v-v0)}{d}, \dfrac{fb}{d} \right)$.

Further, a method of figuring out the position of the object from which the stereo image is obtained using the depth value of the stereo image may use various techniques of the related art.

Here, a seed may be set for a pixel selected from the edge of the image. Further, the seed may be set for pixels in which three-dimensional coordinates are restored as described above. Here, the seed may include at least one of an image coordinate, a disparity, a variance of disparity, a pixel value, and a gradient direction and magnitude.

The position recognizing unit 130 may predict the current position using at least one key frame among the previously stored key frame set based on the status information estimated as described above. Here, the key frame may be a set of seeds including status information of the mobile robot which is periodically measured and the relationship between the key frame K and the seed s is represented by Equation 6.

[Equation 6]

$$K = \{s_0, s_1, \ldots, s_n\}$$

In this case, the position recognition of the mobile robot may be predicted using a registered key frame and may be a process of calculating how much the mobile robot moves with respect to the given key frame.

That is, when the rotation and the movement of one camera with respect to the key frame are defined by parameters R and T, respectively, the projection of a coordinate Pi restored through the seed to the current camera is represented by Equation 7.

[Equation 7]

$$p = \text{prj}(R, T, P_i)$$

Here, p indicates a projection coordinate of the seed to the camera.

The projection coordinate of the seed calculated by Equation 7 is gathered to an edge in the image, which is enabled by appropriate R and T. That is, as the position recognizing result is more accurate, the projection of the coordinate restored through all seeds to the current camera is gathered onto the edge.

The position recognizing unit 130 extracts an edge from the received stereo image to project a seed in a given key frame based on the extracted edge, updates a status parameter indicating rotation and movement of a camera using an intensity error in the calculated projected seed as the projection result, and estimates a position of the mobile robot using the update result.

To this end, the position recognizing unit 130, as illustrated in FIG. 1, includes an intensity error calculating unit 131 which projects a seed in a given key frame to calculate an intensity error between an edge and the project seed as a projection result, a parameter update unit 132 which updates a status parameter indicating rotation and movement of a camera to reduce the calculated intensity error, and a position estimating unit which estimates a position of the mobile robot by a position where the intensity error is reduced based on the updated status parameter. The intensity error calculating unit 132, the status parameter update unit 132, and the position estimating unit 133 may perform the operation of the position recognizing unit 130, which will be described in detail below.

Here, the parameter update unit 132 calculates gradients in a coordinate of the projected seed in the first axis direction and the second axis direction, calculates a projection function using the status parameter at the present time, and updates the status parameter using the calculated intensity error, the gradient, and the projection function to reduce the intensity error.

The projection function is a Jacobian of projection function. To update the status parameter to reduce the intensity error using the projection function is to calculate a hessian matrix using the intensity error, the gradient, and the projection function and to update the status parameter using the hessian matrix to reduce the intensity error.

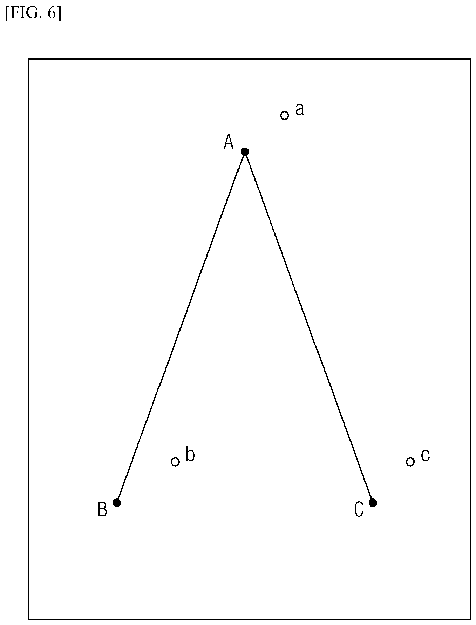

FIG. 6 is a view illustrating a position recognizing concept according to an exemplary embodiment of the present invention.

Referring to FIG. 6, when it is assumed that some pixels of an edge in an image are A, B, and C and the seed in the given key frame is projected to the image and the coordinate of the projected seeds is a, b, c, it is understood that there is an intensity difference between the edge in an actual image and the projected seed, that is, an intensity error in the projected seed.

In this case, when R and T are updated using Equations 3 to 6, the intensity difference between the edge in the actual image and the projected seed is reduced so that very accurate position may be obtained.

According to the exemplary embodiment of the present invention, an accurate position is recognized by updating parameters R and T indicating rotation and movement of a camera so as to reduce the intensity difference between the edge in the actual image and the projected seed, which is referred to as direct tracking.

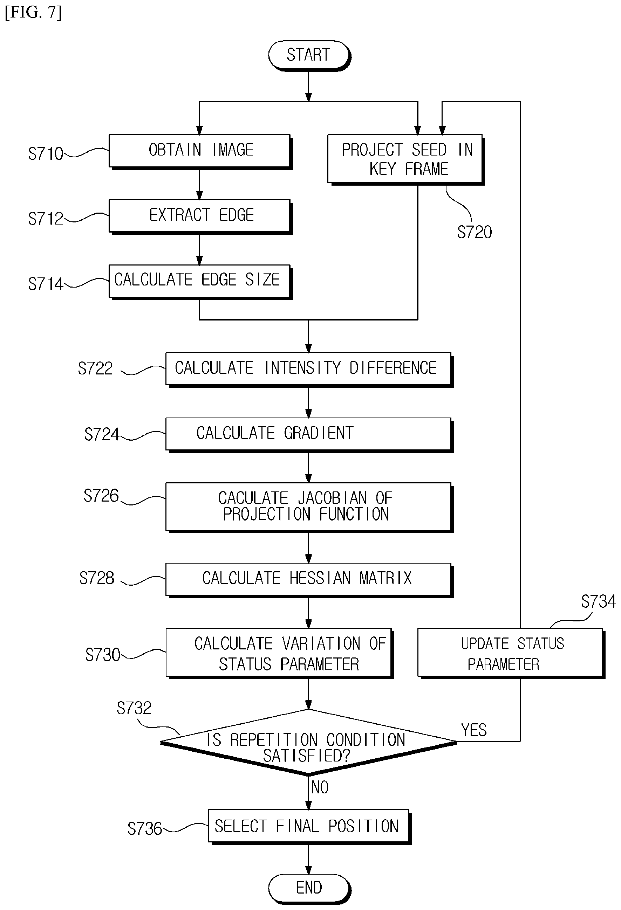

FIG. 7 is a view illustrating a position recognizing process according to an exemplary embodiment of the present invention.

As illustrated in FIG. 7, the position recognizing unit 130 obtains an image at a present time in step S710, extracts an edge from the obtained image in step S712, and calculates a magnitude of the extracted edge in step S714.

Here, the position recognizing unit 130 calculates a gradient in each pixel of an image including the edge in a first axis direction and a second axis direction, calculates a magnitude of the gradient using the calculated gradient in the first axis direction and the second axis direction, and sets the calculated magnitude of the gradient as a size of the edge.

Here, the first axis and the second axis may be different axes which are orthogonal to each other in a coordinate system of an image plane including the edge. The first axis and the second axis may be different axes which are orthogonal to each other in a coordinate system of a stereo image plane. Desirably, the first axis and the second axis may be an x-axis and a y-axis of an orthogonal coordinate system formed by the x-axis and the y-axis.

In this case, the position recognizing unit 130 obtains the gradients $I_x$ and $I_y$ in the x-axis direction and the y-axis direction in each pixel of the image and calculates a gradient magnitude $I_m$ using the obtained gradients $I_x$ and $I_y$ in the x-axis direction and the y-axis direction, as represented in Equation 8. Here, the magnitude of the gradient may be considered as the size of the edge.

$$[\text{Equation } 8]$$

$$I_m = (I_x^2 + I_y^2)^{1/2}$$

Next, the position recognizing unit 130 projects each seed in the selected key frame in step S720 and calculates an intensity difference in the coordinate of the projected seed in step S722. For example, the intensity has a value of 0 to 255 and an intensity in the edge is 255. Therefore, an intensity error corresponding to a difference from 255 is calculated.

Next, the position recognizing unit 130 calculates a gradient $\Delta Pi$ in the coordinate of the projected seed, that is, gradients $I_x$ and $I_y$ in the x-axis direction and the y-axis direction in step S724 as represented in Equation 9.

[Equation 9]

$$\Delta p_i = \begin{bmatrix} I_x \\ I_y \end{bmatrix}$$

Next, when the rotation and movement R and T of the camera are considered as the status parameter $T_c$, the position recognizing unit 130 calculates Jacobian of projection function $J_c$ using the status parameter at the present time in step S726. The Jacobian of projection function is represented by Equation 10.

[Equation 10]

$$J_c = \frac{f}{z} \begin{pmatrix} 1 & 0 & \dfrac{-x}{z} & \dfrac{-xy}{z} & 1+\dfrac{x^2}{z} & -y \\ 0 & 1 & \dfrac{-y}{z} & -1\dfrac{-y^2}{z} & \dfrac{xy}{z} & x \end{pmatrix}$$

Next, the position recognizing unit 130 calculates the Hessian matrix H using the calculated intensity difference, the gradient, and the Jacobian of projection function in step S728 and the hessian matrix H is represented by Equation 11.

[Equation 11]

$$H = J^t W J$$

Here, $J = \Delta p_i{}^t J_c$, $W = wI$ is a weighting matrix, w is a weighting factor obtained by Huber or turkey and I is an image.
Next, the position recognizing unit 130 updates the status parameter using the calculated Hessian matrix.
That is, the position recognizing unit 130 calculates a variation of the status parameter using Equation 6 in step S730 and the variation of the status parameter is defined by Equation 12.

[Equation 12]

$$J^t W J \cdot \nabla T_c = J^t W_e$$

Here, e indicates an intensity difference.
The position recognizing unit 130 checks whether the calculated variation of the status parameter satisfies the predetermined repetition condition to update the status parameter in step S732.
Here, the repetition condition includes whether the variation of the status parameter is equal to or larger than the predetermined threshold value.
That is, when the calculated variation of the status parameter is equal to or larger than the predetermined threshold value as the checking result, the position recognizing unit 130 updates the status parameter using the calculated variation in step S734 and the status parameter to be updated is defined by Equation 13.

[Equation 13]

$$T_c{}^{i+1} = \nabla T_c \cdot T_c{}^i$$

The position recognizing unit 130 may repeat from the process of projecting the seed in the given key frame using the updated status parameter. That is, the position recognizing unit 130 projects the seed in the key frame which is updated by the status parameter to perform the subsequent processes using the changed coordinate of the projected seed.

In contrast, when the calculated variation of the status parameter is within the predetermined threshold as the checking result, the position recognizing unit 130 may set the current position as a final position in step S736.

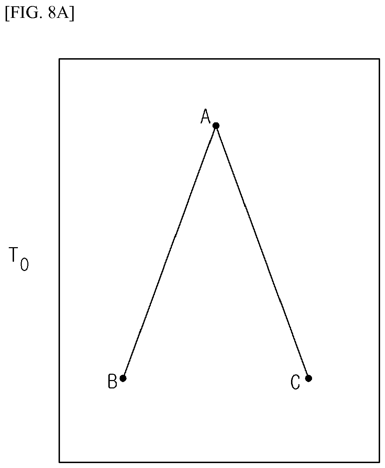

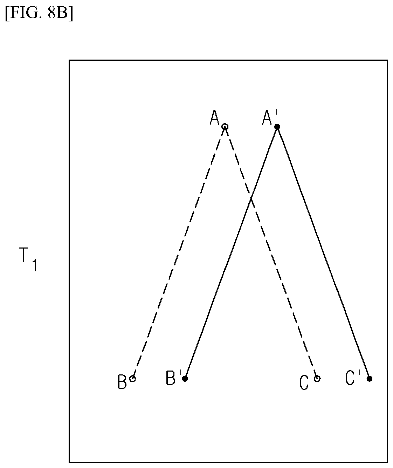

FIGS. 8A and 8B are views illustrating a position recognizing principle according to an exemplary embodiment of the present invention.

Referring to FIG. 8A, edges in the image when the status parameter indicating the rotation and the movement of the camera is To are illustrated. Among these, positions of some edges A, B, and C are illustrated.

Referring to FIG. 8B, edges in the image when the status parameter indicating the rotation and the movement of the camera is $T_1$ are illustrated. Among these, positions of some edges A', B', and C' are illustrated.

That is, when the status parameter To in FIG. 8A is assumed as the status parameter in the current position, the status parameter $T_1$ in FIG. 8B may be estimated as the status parameter in the position to be updated through the variation $\nabla T$.

In the present invention, processes of projecting a seed in a given key frame based on predicted status information to calculate an intensity difference between an edge in an image and the project seed as a projection result, updating a status parameter indicating rotation and movement of a camera to reduce the calculated intensity difference and estimating a position based on the updated status parameter are repeatedly performed until the intensity difference becomes within a threshold value.

The obstacle sensing unit 140 receives the stereo image from the wide angle camera 110 to extract a predetermined number of horizontal lines in the received stereo image. Here, the predetermined number is at least two and desirably three.

The obstacle sensing unit 140 performs dense stereo matching along the extracted horizontal line to obtain distance information to the obstacle as the result. Here, the dense stereo matching is a concept which is distinguished from sparse stereo matching and is a matching method which calculates an exact matching result when matching is performed between stereo images. To this end, various methods of the related art for adjusting a matching interval or adjusting a search range for the matching may be used. To this end, various methods of the related art for adjusting a matching interval or adjusting a search range for the matching may be used.

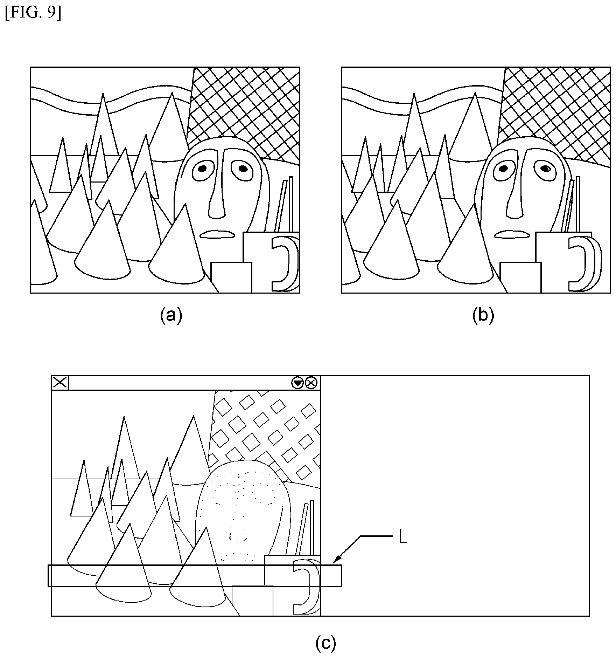

FIG. 9 is a view illustrating an obstacle sensing process according to an exemplary embodiment of the present invention.

As illustrated in FIG. 9, the obstacle sensing unit 140 performs highly dense stereo matching based on the received left and right stereo images as illustrated in FIGS. 9(a) and 9(b) to calculate a depth value as the result. Here, in the image of FIG. 9(c), the depth value calculated as described above is represented by gray scales. Further, FIG. 9(c) illustrates a linear region L which is used to sense the obstacle.

In this case, since the depth value for the entire region cannot be calculated by a mobile robot mounted with a small-size processor, in the exemplary embodiment of the present invention, a depth value is extracted only from a partial region.

The map creating unit 150 is provided with current position information which is estimated by the position recognizing unit 130, reconstructs a pose graph based on position information, and updates the previously stored key frame set based on the reconstructed pose graph.

The DB 160 stores the key frame set generated in accordance with movement of the mobile robot.

A method of recognizing a position of a mobile robot according to another exemplary embodiment of the present invention includes receiving at least one pair of stereo images obtained using a camera provided in the mobile robot; and extracting an edge from the received stereo images to project each seed in a given key frame based on the extracted edge, updating a status parameter indicating rotation and movement of the camera using an intensity error in the projected seed calculated as the projection result and estimating the position of the mobile robot using the updated result. The method of recognizing a position of a mobile robot may operate by the same way as the apparatus of recognizing a position of the mobile robot described above. Therefore, redundant parts will be omitted or simply described.

The estimating includes an intensity error calculating step of projecting a seed in a given key frame to calculate an intensity error between an edge and the project seed as a projection result, a parameter updating step of updating a status parameter indicating rotation and movement of a camera to reduce the calculated intensity error, and a position estimating step of estimating a position of the mobile robot to a position where the intensity error is reduced based on the updated status parameter.

Here, in the parameter update step, gradients is calculated in a coordinate of the projected seed in the first axis direction and the second axis direction, a projection function is calculated using the status parameter at the present time, and the status parameter is updated using the calculated intensity error, the gradient, and the projection function to reduce the intensity error.

Here, the projection function is a Jacobian of projection function. To update the status parameter to reduce the intensity error using the projection function is to calculate a hessian matrix using the intensity error, the gradient, and the projection function and to update the status parameter using the hessian matrix to reduce the intensity error.

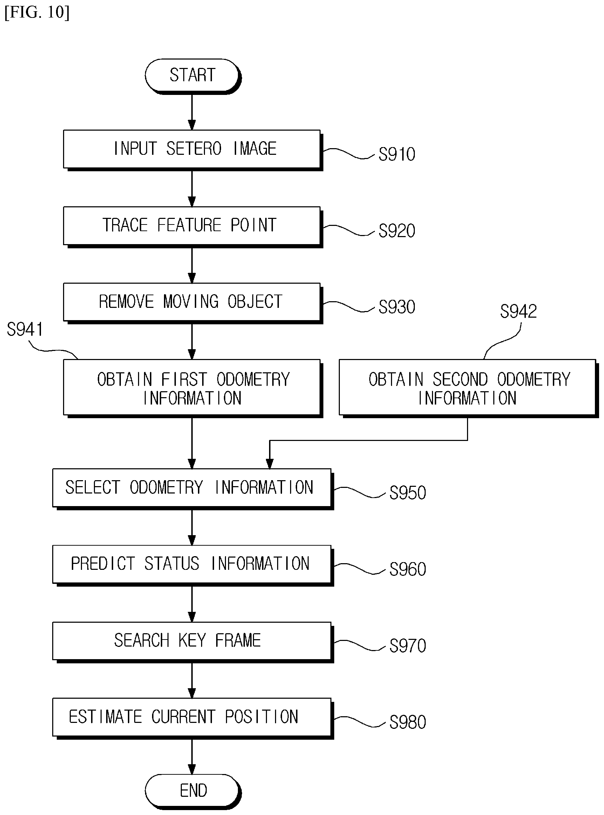

FIG. 10 is a view illustrating a method of recognizing a position of a mobile robot according to an exemplary embodiment of the present invention.

As illustrated in FIG. 10, a mobile robot position recognizing apparatus (hereinafter, referred to as a position recognizing apparatus) according to an exemplary embodiment of the present invention receives a stereo image from the wide angle camera in step S910, extracts a feature point from the input stereo image and consistently traces the extracted feature point in the unit of frame in step S920.

Next, the position recognizing apparatus may remove a moving object in the stereo image in step S930.

For example, the position recognizing apparatus compares the current frame and the last n-th frame to remove an inconsistent feature which may be determined as a moving object as the comparison result.

Next, the position recognizing apparatus performs visual odometry based on the traced feature point to obtain first odometry information as the result in step S940 and obtain second odometry information through inertia information based internal odometry in step S942.

Next, the position recognizing apparatus selects one odometry information between first odometry information and second odometry information in step S950 and predicts status information using the selected odometry information and pose information in step S960.

In this case, the position recognizing apparatus selects the first odometry information when the first odometry information satisfies a predetermined condition and selects the second odometry information when the first odometry information does not satisfy the predetermined condition.

Here, when it is determined whether the predetermined condition is satisfied, it is determined that the odometry information, for example, a change rate of the position information is within a predetermined threshold value.

Next, the position recognizing apparatus searches at least one key frame among the previously stored key frame set based on the predicted status information in step S970 and estimates the current position using at least one searched key frame in step S980.

In the present invention, processes of projecting a seed in a given key frame based on predicted status information to calculate an intensity difference between an edge in an image and the project seed as a projection result, updating a status parameter indicating rotation and movement of a camera to reduce the calculated intensity difference and estimating a position based on the updated status parameter are repeatedly performed until the intensity difference becomes within a threshold value.

In this case, the position may be accurately estimated as the number of adjacent key frames is large.

The position recognizing apparatus according to the exemplary embodiment may be applied to autonomous cleaning robot or service robot. For example, the cleaning robot autonomously moves in an indoor environment or an outdoor environment. When the cleaning robot moves, the cleaning robot meets various obstacles such as a wall, a guardrail, a desk, or furniture and the autonomous cleaning robot determines a moving route using the position of the robot in the cleaning area and the position of the obstacle and moves along the moving route. According to the exemplary embodiment, the autonomous cleaning robot includes the stereo camera, specifically, a wide angle stereo camera as an image capturing unit to obtain an external image. By doing this, the autonomous cleaning robot estimates its own position, determines the moving route, and moves using information on the external environment obtained thereby, specifically, using the feature point related to an edge.

Specifically, in the case of the cleaning robot which autonomously moves based on simultaneous localization and map-building (SLAM), the exemplary embodiment may be used to estimate its own position on the constructed lattice map, estimate a position of the obstacle, determine a movement route to avoid collision with the obstacle using the estimated position relationship or determine an optimal route.

For example, the odometry information may be information obtained from a wheel mounted in the mobile robot or rotary encoders in a legged joint. The status information such as movement distance of the mobile robot or a number of rotations of the wheel may be calculated using the odometry information. Further, the space where the mobile robot is currently located may be understood through the status information so that the odometry information may be used to determine the key frame during the image processing.

The position recognizing method according to the exemplary embodiment of the present invention may be implemented as computer readable software and the software may be executed in a processor mounted in the autonomous cleaning robot.

Even though all components of the exemplary embodiment may be combined as one component or operates to be combined, the present invention is not limited to the exemplary embodiment. In other words, one or more of all of the components may be selectively combined to be operated within a scope of the present invention. Further, all of the components may be implemented as one independent hardware but a part or all of the components are selectively combined to be implemented as a computer program which includes a program module which performs a part or all of functions combined in one or plural hardwares. Further, such a computer program may be stored in a computer readable media such as a USB memory, a CD disk, or a flash memory to be read and executed by a computer to implement the exemplary embodiment of the present invention. The recording media of the computer program may include a magnetic recording medium, an optical recording medium, or a carrier wave medium.

The exemplary embodiments of the present invention which have been described above are examples and it is obvious to those skilled in the art that various changes or modifications may be made without departing from the spirit and scope of the present invention. Therefore, the exemplary embodiments of the present invention are provided for illustrative purposes only but not intended to limit the technical spirit of the present invention. The scope of the technical concept of the present invention is not limited thereto. The protective scope of the present invention should be construed based on the following claims, and all the technical concepts in the equivalent scope thereof should be construed as falling within the scope of the present invention.

**Claims**

1. An apparatus for recognizing a position of a mobile robot, comprising:

    an image input unit which receives at least one pair of stereo images obtained using a camera provided in a mobile robot; and
    a position recognizing unit which extracts an edge from the received stereo image to project a seed in a given key frame based on the extracted edge, updates a status parameter indicating rotation and movement of a camera using an intensity error in the calculated projected seed as the projection result, and estimates a position of the mobile robot using the update result.

2. The apparatus of claim 1, further comprising:

    two cameras which obtain the stereo images.

3. The apparatus of claim 1, wherein the position recognizing unit includes:

    an intensity error calculating unit which projects a seed in a given key frame to calculate an intensity error between an edge and the project seed as a projection result;
    a parameter updating unit which updates a status parameter indicating rotation and movement of a camera to reduce the calculated intensity error; and
    a position estimating unit which estimates a position of the mobile robot as a position where the intensity error is reduced based on the updated status parameter.

4. The apparatus of claim 3, wherein the parameter update unit calculates gradients in the first axis direction and the second axis direction in a coordinate of the projected seed, calculates a projection function using the status parameter at the present time, and updates the status parameter using the calculated intensity error, the gradient, and the projection function to reduce the intensity error.

5. The apparatus of claim 4, wherein the projection function is a Jacobian of projection function and to update the status parameter to reduce the intensity error using the projection function is to calculate a hessian matrix using the intensity error, the gradient, and the projection function and to update the status parameter using the hessian matrix to reduce the intensity error.

6. The apparatus of claim 5, wherein the position recognizing unit calculates a variation of the status parameter to be updated using the hessian matrix, checks whether the calculated variation of the status parameter satisfies the predetermined repetition condition to update the status parameter and selects the final position by the status parameter at the present time when the repetition condition is not satisfied as the checking result.

7. The apparatus of claim 6, wherein when the repetition condition is satisfied as the checking result, the position recognizing unit updates the status parameter using the calculated variation.

8. The apparatus of claim 6, wherein the repetition condition includes whether the variation of the status parameter is equal to or larger than the predetermined threshold value.

9. The apparatus of claim 1, wherein the position recognizing unit predicts status information using calculated odometry information based on the edge and estimates the current position using the predicted status information and the previously stored key frame.

10. The apparatus of claim 1, wherein the position recognizing unit predicts status information using one of first odometry information calculated based on the edge and second odometry information calculated based on inertia information and estimates the current position using the predicted status information and the previously stored key frame.

11. The apparatus of claim 10, wherein the position recognizing unit selects the first odometry information when the first odometry information satisfies the predetermined condition and selects the second odometry information when the first odometry information does not satisfy the predetermined condition.

12. The apparatus of claim 10, wherein the position recognizing unit searches for at least one key frame among a previously stored key frame set based on the predicted status information and estimates the current position of the mobile robot using at least one searched key frame as the result.

13. The apparatus of claim 1, wherein the extracting of the edge includes: calculating a gradient in a first axis direction and a second axis direction in each pixel of the received stereo image and extracting the edge based on the gradient to the first axis direction and the second axis direction or

    performing a smoothing process on the received stereo image, obtaining a smoothing image as the smoothing process result, comparing the smoothing image and an original stereo image to extract the edge.

14. A method for recognizing a position of a mobile robot, comprising:

    receiving at least one pair of stereo images obtained using a camera provided in a mobile robot; and
    extracting an edge from the received stereo image to project a seed in a given key frame based on the extracted edge, updating a status parameter indicating rotation and movement of a camera using an intensity error in the projected seed calculated as the projection result, and estimating a position of the mobile robot using the update result.

15. The method of claim 14, wherein the estimating includes:

    projecting a seed in a given key frame to calculate an intensity error between an edge and the project seed as a projection result;
    updating a status parameter indicating rotation and movement of a camera to reduce the calculated intensity error; and
    estimating a position of the mobile robot as a position where the intensity error is reduced based on the updated status parameter.

16. The method of claim 15, wherein in the updating, a gradient in the first axis direction and the second axis direction is calculated in a coordinate of the projected seed, a projection function is calculated using the status parameter at the present time, and the status parameter is updated using the calculated intensity error, the gradient, and the projection function to reduce the intensity error.

17. The method of claim 16, wherein the projection function is a Jacobian of projection function and to update the status parameter to reduce the intensity error using the projection function is to calculate a hessian matrix using the intensity error, the gradient, and the projection function and to update the status parameter using the hessian matrix to reduce the intensity error.

18. The method of claim 17, wherein in the estimating, a variation of the status parameter to be updated is calculated using the hessian matrix,
    it is checked whether the calculated variation of the status parameter satisfies the predetermined repetition condition to update the status parameter and the final position is selected by the status parameter at the present time when the repetition condition is not satisfied as the checking result.

19. The method of claim 18, wherein in the estimating, when the repetition condition is satisfied as the checking result, the status parameter is updated using the calculated variation.

20. The method of claim 18, wherein the repetition condition includes whether the variation of the status parameter is equal to or larger than the predetermined threshold value.

21. The method of claim 14, wherein in the estimating, status information is predicted using odometry information calculated based on the edge and the current position is estimated using the predicted status information and the previously key frame.

22. The method of claim 14, wherein in the estimating, status information is predicted using one of first odometry information calculated based on the edge and second odometry information calculated based on inertia information and the current position is estimated using the predicted status information and the previously stored key frame.

23. The method of claim 22, wherein in the estimating, at least one key frame is searched among a previously stored key frame set based on the predicted status information and the current position of the mobile robot is estimated using at least one searched key frame as the result.

24. A computer readable recording medium having a program recorded thereon configured to perform the method of recognizing a position of a mobile robot of any one of claims 14 to 23.

[FIG. 1]

[FIG. 2]

ROI

10

[FIG. 3]

[FIG. 4]

[FIG. 5]

[FIG. 6]

[FIG. 7]

```
                          ( START )
                              |
          +-------------------+---------------------+------+
          |                                         |      |
          v                                         v      |
S710 --[ OBTAIN IMAGE ]              S720 -- [ PROJECT SEED IN    |
          |                                    KEY FRAME ]        |
          v                                         |            |
S712 --[ EXTRACT EDGE ]                             |            |
          |                                         |            |
          v                                         |            |
S714 --[ CALCULATE EDGE SIZE ]                      |            |
          |                                         |            |
          +-------------------+---------------------+            |
                              |                                  |
                              v                                  |
S722 --[ CALCULATE INTENSITY DIFFERENCE ]                        |
                              |                                  |
                              v                                  |
S724 --[ CALCULATE GRADIENT ]                                    |
                              |                                  |
                              v                                  |
S726 --[ CACULATE JACOBIAN OF                                    |
              PROJECTION FUNCTION ]                              |
                              |                                  |
                              v                                  |
S728 --[ CALCULATE HESSIAN MATRIX ]                              |
                              |                                  |
                              v                                  |
S730 --[ CALCULATE VARIATION OF    ]    S734 --[ UPDATE STATUS   |
              STATUS PARAMETER               PARAMETER ]         |
                              |                     ^            |
                              v                     |            |
S732 --< IS REPETITION CONDITION >------ YES -------+------------+
              SATISFIED?
                              |
                             NO
                              v
S736 --[ SELECT FINAL POSITION ]
                              |
                              v
                          ( END )
```

[FIG. 8A]

[FIG. 8B]

[FIG. 9]

(a)

(b)

(c)

[FIG. 10]

```
                    ┌─────────────┐
                    │    START    │
                    └──────┬──────┘
                           │
                           ▼
              ┌─────────────────────────┐
              │   INPUT  SETERO  IMAGE   │────  S910
              └───────────┬─────────────┘
                          │
                          ▼
              ┌─────────────────────────┐
              │  TRACE  FEATURE  POINT   │────  S920
              └───────────┬─────────────┘
                          │
                          ▼
              ┌─────────────────────────┐
              │  REMOVE  MOVING  OBJECT  │────  S930
              └───────────┬─────────────┘
   S941                   │                              S942
    ┌──────────────┐      │              ┌──────────────────┐
    ▼                     ▼              ▼
  ┌──────────────────────────┐   ┌──────────────────────────┐
  │  OBTAIN FIRST ODOMETRY    │   │  OBTAIN SECOND ODOMETRY   │
  │       INFORMATION         │   │       INFORMATION         │
  └───────────┬──────────────┘   └────────────┬─────────────┘
              │                               │
              │         ┌─────────────────────┘
              ▼         ▼
    ┌──────────────────────────┐
    │ SELECT ODOMETRY INFORMATION │──── S950
    └────────────┬───────────────┘
                 │
                 ▼
    ┌──────────────────────────┐
    │ PREDICT STATUS INFORMATION │──── S960
    └────────────┬───────────────┘
                 │
                 ▼
    ┌──────────────────────────┐
    │     SEARCH KEY FRAME       │──── S970
    └────────────┬───────────────┘
                 │
                 ▼
    ┌──────────────────────────┐
    │ ESTIMATE CURRENT POSITION  │──── S980
    └────────────┬───────────────┘
                 │
                 ▼
          ┌─────────────┐
          │     END     │
          └─────────────┘
```

## INTERNATIONAL SEARCH REPORT

| | International application No. |
|---|---|
| | **PCT/KR2015/006156** |

**A. CLASSIFICATION OF SUBJECT MATTER**

***B25J 13/08(2006.01)i, B25J 9/16(2006.01)i***

According to International Patent Classification (IPC) or to both national classification and IPC

**B. FIELDS SEARCHED**

Minimum documentation searched (classification system followed by classification symbols)
B25J 13/08; B25J 9/00; G06T 17/00; G05D 1/02; B25J 19/04; B25J 5/00; B25J 9/16

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: position, awareness, edge, image, brightness, error, projection

**C. DOCUMENTS CONSIDERED TO BE RELEVANT**

| Category* | Citation of document, with indication, where appropriate, of the relevant passages | Relevant to claim No. |
|---|---|---|
| A | KR 10-2011-0047797 A (YUJIN ROBOT CO., LTD.) 09 May 2011<br>See claims 1, 4, paragraphs [0032]-[0060] and figure 1. | 1-24 |
| A | KR 10-2010-0081588 A (SAMSUNG ELECTRONICS CO., LTD.) 15 July 2010<br>See claims 1-5, paragraphs [0020]-[0035] and figure 3. | 1-24 |
| A | KR 10-0834577 B1 (ELECTRONICS AND TELECOMMUNICATIONS RESEARCH INSTITUTE) 02 June 2008<br>See abstract, claims 1, 2, paragraphs [0036]-[0050] and figures 1, 2. | 1-24 |

| ☐ Further documents are listed in the continuation of Box C. | ☒ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 JULY 2015 (31.07.2015) | **03 AUGUST 2015 (03.08.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/006156**

| Patent document cited in search report | Publication date | Patent family member | Publication date |
|---|---|---|---|
| KR 10-2011-0047797 A | 09/05/2011 | CN 102656532 A | 05/09/2012 |
| | | EP 2495632 A1 | 05/09/2012 |
| | | JP 05-490911 B2 | 14/05/2014 |
| | | JP 2013-508874 A | 07/03/2013 |
| | | KR 10-1083394 B1 | 14/11/2011 |
| | | US 2012-0213443 A1 | 23/08/2012 |
| | | US 8849036 B2 | 30/09/2014 |
| | | WO 2011-052826 A1 | 05/05/2011 |
| KR 10-2010-0081588 A | 15/07/2010 | US 2010-0172571 A1 | 08/07/2010 |
| | | US 8824775 B2 | 02/09/2014 |
| KR 10-0834577 B1 | 02/06/2008 | US 2008-0215184 A1 | 04/09/2008 |

Form PCT/ISA/210 (patent family annex) (July 2009)

30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2015006156 W

- KR 1020140073708

**Non-patent literature cited in the description**

- **CANNY, J.** A Computational Approach To Edge Detection. *IEEE Trans. Pattern Analysis and Machine Intelligence,* 1986, vol. 8 (6), 679-698